# EUROPEAN PATENT SPECIFICATION

(11) **EP 4 286 464 B1**
(45) Date of publication and mention of the grant of the patent: **13.08.2025**
(21) Application number: 23382156.0
(22) Date of filing: 20.02.2023
(51) Int. Cl.: C08J 11/12, C10B 53/07, C10B 57/02, C10B 57/06, C10G 1/10, C10K 1/04, C10K 1/06

(54) **VACUUM PYROLYSIS PROCESS OF MIXED PLASTIC AND BIOMASS WASTE**
VAKUUMPYROLYSEPROZESS VON GEMISCHTEN KUNSTSTOFF- UND BIOMASSEABFÄLLEN
PROCESSUS DE PYROLYSE SOUS VIDE DE DÉCHETS MIXTES DE PLASTIQUE ET DE BIOMASSE

(43) Date of publication of application: 06.12.2023
(73) Proprietor: Liquen Technology S.L., 28046 Madrid (ES)
(72) Inventor: GONZÁLEZ EGIDO, Sergio David, 28046 MADRID (ES)
(74) Representative: Isern Patentes y Marcas S.L.

(56) References cited:
- CN-A- 114 774 145
- DEWANGAN ASHISH ET AL: "Co-pyrolysis of sugarcane bagasse and low-density polyethylene: Influence of plastic on pyrolysis product yield", FUEL, IPC SIENCE AND TECHNOLOGY PRESS , GUILDFORD, GB, vol. 185, 9 August 2016 (2016-08-09), pages 508 - 516, XP029706867, ISSN: 0016-2361, DOI: 10.1016/J.FUEL.2016.08.011
- WAN MAHARI WAN ADIBAH ET AL: "Valorization of municipal wastes using co-pyrolysis for green energy production, energy security, and environmental sustainability: A review", CHEMICAL ENGENEERING JOURNAL, ELSEVIER, AMSTERDAM, NL, vol. 421, 16 April 2021 (2021-04-16), XP086628542, ISSN: 1385-8947, [retrieved on 20210416], DOI: 10.1016/J.CEJ.2021.129749
- VASILE C ET AL: "Thermal valorisation of biomass and of synthetic polymer waste upgrading of pyrolysis oils", CELLULOSE CHEMISTRY AND TECHNOLOGY, EDITURA ACADEMIEI ROMANE, RO, vol. 40, no. 7, 31 January 2006 (2006-01-31), pages 489 - 512, XP008177496, ISSN: 0576-9787

## Description

### STATE OF THE ART

To date, various processes for the pyrolysis or depolymerisation of biomass or plastics, but not of their mixtures, have been described.

Thermochemical processes in the absence of oxygen generate solid and gaseous fractions, being able to generate liquid fractions depending on reaction conditions. Processes with long reaction times generate carbons and gases, not liquids. High temperature thermochemical processes, normally higher than 750 °C, generate carbons and non-condensable gases, not liquids, since they carry out a strong cracking that does not produce liquid compounds.

Fast pyrolysis thermochemical technologies generate three product lines: a carbonaceous solid product, a liquid product and a gaseous product called synthesis gas or pyrolysis gas.

Liquid and solid products are the products that have the greatest potential for the development of a circular economy and the integration of pyrolysis products into production processes. Pyrolysis gases or synthesis gases also have significant potential for use as a source of chemical products. The thermochemical transformation of waste and solid products into liquid products, synthesis gas and carbonaceous solids enables the development of a promising route embedded within the processes of advanced biorefineries. Thermochemical technologies with high liquid throughput present a huge technological breakthrough as the treatment of liquids on an industrial scale is more immediate than the treatment of gaseous fractions.

These same arguments can be used for carbonaceous products. Carbonaceous materials have a broad field of application, although they require specific characteristics of quality and stability. The characteristics of stability and quality depend on the polymeric material used as raw material and fundamentally on the thermochemical process and its variables. This field requires technologies that develop different thermochemical stages in a controlled manner, which can be continuously developed to improve the efficiency of the processes.

The most complex non-oxidative thermochemical processes, which are performed in the absence of oxygen, are those which propose the efficient obtaining of liquid compounds. At present, there are many processes for obtaining liquids derived from rubbers, such as tires, which are performed in rotary kiln type clinker or rotary cylindrical reactors in which slow pyrolysis occurs with a very coarse and inefficient heat transfer. There are other processes for pyrolysis of plastics that require single-material plastics with a high degree of cleanliness. These processes require a first heating of the plastics to liquefy them and introduce them into catalytic or thermal reactors. These processes are very expensive, have a high carbon footprint and high energy consumption.

In the field of synthetic polymers from plastics, there are no efficient technologies that allow the processing of multi-material or multi-polymer waste with a high degree of soiling. Treatments that process soiled or mixed waste are required in the field of waste. Most of the time, waste is in the form of multi-material mixtures that cannot be separated into mono-materials efficiently; therefore, technologies are needed to process this type of mixed materials made up of synthetic polymers, natural polymers with other inert materials such as metals and organic and inorganic compounds.

In the field of natural polymers such as lignocellulosic biomass, there are inefficient technologies that are mainly intended to obtain carbon. These technologies are known as carbonisation technologies. There are also some technologies in which, at the same time that carbon is obtained, a liquid mixture made up of organic fractions with a high acid component is obtained. This acidity comes from carboxylic acids that are fundamentally generated in the decomposition of cellulose and hemicellulose. The acidity and the very different composition of organic compounds make their integration in thermal or chemical processes very difficult. This field requires an invention that enables efficient and stable separation of aqueous and organic fractions.

At present, there are pyrolysis processes intended for the treatment of plastic materials only and other pyrolysis processes intended for the treatment of biomass. In the field of waste, there is a large amount of waste that is made up of mixtures of synthetic or plastic polymeric waste and natural polymeric waste such as lignocellulosic biomass. Suitable transformation processes are needed for synthetic materials, natural materials and mainly their mixtures.

When pyrolysis processes plastic waste and mixtures thereof with natural polymers or their derivatives, they produce carbonaceous materials and a liquid stream made up of a mixture of water and organic substances consisting of aliphatic and aromatic hydrocarbons. These liquid streams entrain a part of the heteroatoms present in the polymers, in their fillers or mineral salts; therefore, the hydrocarbons obtained exhibit, together with a great diversity of organic compounds, a presence of heteroatoms such as N, S, Cl, Si, P, Ca, K, Fe, Zn, etc.

Depending on the composition of the processed raw materials, the type of pretreatment, configuration and design of reactors, pyrolysis reaction conditions, presence of catalysts or not, three fundamental fractions are obtained: a solid fraction made up of carbonaceous materials and inorganic elements, a non-condensable gas fraction and a liquid fraction from the condensable gases.

At present, pyrolysis liquids are characterised by being heterogeneous mixtures with a significant presence of particles of various sizes, comprised between 2 and 500 microns, heavy compounds consisting of hydrocarbons with molecular chains of more than C20, and diolefin compounds, which are unstable over time due to their reactivity. These mixtures are usually settled and distilled to remove heavy components and suspended particles. These operations generate unstable liquids of poor quality, which evolve after a few hours, generating phases and compounds that make their subsequent use difficult. The heterogeneity of the composition means that, with distillation or fractionation operations, undesirable components are distributed irregularly among the different fractions obtained. This lack of quality and homogeneity greatly hinders the industrial utilisation of these mixtures.

Decomposition by means of biomass pyrolysis produces a series of organic compounds with various functional groups, among which are alcohols, ketones, aldehydes and carboxylic acids. These compounds react with each other while undergoing oxidation reactions that modify the composition of the liquids obtained. Organic compounds give an acidic character and are largely responsible for the corrosion shown by liquids generated in thermal depolymerisation processes.

Depending on the type of plastic waste and the type of residual biomass, simple organic or complex aromatic compounds are obtained, derived from the partial decomposition of the lignin present in lignocellulosic waste or plastic polymers.

At present, treatments for the improvement and stabilisation of pyrolysis oils involve the treatment of pyrolysis oils in large and expensive pressure and high temperature facilities to perform hydrodeoxygenation and hydrodesulphurisation in batch or continuous processes. They are also used in high temperature catalytic cracking processes with zeolites or hydrogenation processes with metal catalysts such as Ru, Pd, Co, Mo, Zn, Ni, etc., supported on carbon, aluminas, or silica-alumina. These processes are very expensive in terms of investment and operation and highly sensitive to the contamination present in pyrolysis oils. Another problem with these processes is that they are developed on petrochemical scales, so they are not adaptable or usable at the smaller scales of pyrolysis or depolymerisation plants.

Pyrolysis or co-pyrolysis oils from plastic waste and other waste such as biomass have a complex and variable composition, compared to the hydrocarbon streams that occur in conventional refineries, so they require an innovation in the treatment and in the design of the equipment for their treatment and an improvement in quality and stabilisation.

In the state of the art, there are descriptions of vacuum pyrolysis processes involving mixed plastic and biomass waste at laboratory scale. These processes yield a significant amount of hydrogen-rich pyrolysis oil. One such study is "Co-pyrolysis of sugarcane bagasse and low-density polyethylene: Influence of plastic on pyrolysis product yield" published in Fuel 185 (2016) 508-516.

There is a need for an innovation that allows improvement and stabilisation on a small scale and that does not require large facilities that are costly in terms of investment and operation.

### DESCRIPTION OF THE INVENTION

The present invention describes a non-oxidative thermal depolymerisation process under vacuum conditions comprising a series of devices and methods for transforming polymeric materials into liquid products, functional carbons and synthesis gas.

The technological method is performed in a series of devices by means of which a non-oxidative vacuum thermal depolymerisation is achieved in which there is a hydrogen transfer from waste and synthetic polymeric materials to other products resulting from the non-oxidative vacuum thermal depolymerisation of natural polymers. This method makes it possible to obtain high-quality liquid circular products, bioproducts and functional carbons.

The present invention comprises a series of innovations aimed at transforming a raw material made up of natural or synthetic polymeric materials (herbaceous biomass, lignocellulosic biomass, paper and cardboard, multi-materials, plastic waste, textile materials, etc.) into carbonaceous solid products, aqueous mixtures and hydrocarbon mixtures that meet the specifications required in the chemical industry and/or in the industry for the manufacture of fuels and other technical materials.

The method consists of several sequential processes or stages (PS-1 to PS-11) that are made up of a series of sub-stages (E-1 to E-35) which achieve the non-oxidative vacuum thermal depolymerisation with hydrogen transfer, which transforms the polymeric materials (R-1 to R-3) into simple molecules used as bioproducts or circular products (BP-1 to BP-8).

The non-oxidative vacuum thermal depolymerisation method for obtaining liquid circular products, bioproducts and functional carbons, wherein a hydrogen transfer takes place to produce hydrocarbons from solid waste, comprises the following stages:
- **Raw Material Selection and Treatment Process (PS-1).** Stage for the selection and conditioning of the residual biomass (R-1), polymeric multi-material waste (R-2) or their mixtures (R-3).
- **Low Temperature Non-Oxidative Vacuum Thermal Process (PS-2).** Stage prior to the high temperature non-oxidative vacuum thermal depolymerisation process of additivation, heating, drying fed with exhaust gases to adjust the humidity of the materials to be depolymerised.
- **High Temperature Non-Oxidative Vacuum Thermal Depolymerisation Process (PS-3).** Stage for non-oxidative vacuum thermal depolymerisation heat treatment in series made up of a sequence of reactors in series, which can be carried out in various reactors with a minimum of two.
- **High Temperature Carbonisation and Non-Oxidative Functionalisation Process (PS-4).** Stage carried out in a specific carbonisation reactor that allows the incorporation of additives and independent regulation of residence times, vacuum and reaction temperature. The process makes it possible to obtain modified or functionalised carbon or biochar (BP-2) from raw carbon or biochar (BP-1). The process makes it possible to obtain raw carbons or the continuous treatment thereof for modification.
- **Raw Gas Treatment Process (PS-5).** Process leading to the separation and recovery of syngas obtained in high temperature thermal depolymerisation and carbonisation processes.
- **Very Heavy Organic Stream Recirculation Process (PS-6).** Process of capturing and separating very heavy organic streams and the recirculation thereof to the carbonisation reactor. The process allows the output of very heavy organic streams (BP-3) for external processes or for the reprocessing thereof.
- **Light Gas Process (PS-7)** Process in which a wash is performed in a quench type device at a controlled low temperature and with variable reflux, followed by a stage of settling and separating process water and light streams. The process allows the output of the aqueous fraction (BP-4).
- **Light Stream Treatment Process (PS-8)** Sequential improvement process by means of different stages of light organic streams. Process of capturing light streams in which a stage of homogenising the different light streams, followed by settling and multifiltration to obtain a light stream product of quality. The process makes it possible to obtain light organic fractions (BP-5).
- **Syngas stream capture and treatment process (PS-9)** Process of separating and conditioning the syngas generated in non-oxidative thermal multi-stage reactors.
- **Sequential multi-stage improvement and selective adsorption process (PS-10).** Sequential process of different stages which performs an improvement of the light streams by means of multi-stage selective adsorption leading to obtaining a stabilised improved product (BP-6).
- **Syngas Stream Reuse Process (PS-11)** Process leading to the adjustment of the syngas stream so that it is recovered in the burner and to be able to use its thermal energy in the different processes. In addition, devices to achieve a minimum emission of pollutants in the form of non-harmful gases are added. The process makes it possible to obtain quality syngas (BP-7) or the thermal energy derived from the combustion of syngas (BP-8) in whole or in part, making it possible to produce both products simultaneously.

The process of the invention has the following advantages with respect to the processes of the state of the art:
Advantage 1: It enables the treatment of mixtures of low or poor quality synthetic polymers (soiled plastics) and natural polymers (biomass). Method, design of devices and process that allows pyrolytic thermochemical processing in the absence of oxygen of natural polymers (biomass, collagen, etc.), synthetic polymers (plastics and rubbers) and their mixtures.
Advantage 2: It makes it possible to obtain organic and aqueous liquid fractions separately and with high quality and stability. Method and design of specific devices for the treatment of organic and aqueous liquid fractions of thermochemical pyrolysis processes, which improves their quality and stability, transforming them into products suitable for industrial use in processes in the chemical industry or as biofuels, circular fuels or circular products with a low carbon footprint.
Advantage 3: It allows the sequential addition of additives in the different vacuum thermal stages. Thermal process reactors allow vacuum reactions to be performed in a series sequence, being able to modify the temperature variables, residence time, enabling the addition of additives at different stages.
Advantage 4. It makes it possible to obtain functionalised carbons continuously. The process and devices have a continuous stage, in series, which makes it possible to carry out customised carbonisation reactions and incorporate additives that react with the raw carbon in the carbonisation stage, giving rise to functional or improved carbons.
Advantage 5. It enables the treatment of waste with humidity. The configuration of a low temperature non-oxidative vacuum thermal stage fed with the combustion gases of the synthesis gas makes it possible to carry out a drying operation to adapt the humidity of the mixtures to be processed to a humidity of less than 20% upon entering the non-oxidative vacuum thermal depolymerisation stage.
Advantage 6. It makes it possible to obtain stable organic liquid fractions of suitable quality for processing in the chemical industry. The sequence of separation, condensation and stabilisation devices enables the washing of condensable and non-condensable gases, the separation of solid particles, the separation of heavy compounds present in light organic streams and the adsorption of heteroatoms present therein. The streams derived from the organic fractions of the obtained liquids can be subjected to complementary stages of separation treatments with solid adsorbents to improve stability.
Advantage 7. It enables a highly energy-efficient treatment. The process and devices make comprehensive and highly efficient utilisation of non-condensable gases and their transformation into thermal energy by means of their combustion in a sequential burner and a double inlet adjustable post-combustion chamber.
Advantage 8. It enables the transformation of natural and/or synthetic polymeric waste without the emission of pollutants. The process is equipped with two pieces of equipment intended to ensure the combustion of the non-condensable gases and their unburned products in two stages in series, a thermal oxidation stage and a thermocatalytic stage.
Advantage 9. It enables the transformation and recycling of polymeric waste through a circular economy route with high efficiency, low carbon footprint and no generation of microplastics. The process allows a carbon footprint reduction of more than 90% due to the use of synthesis gases produced in the non-oxidative vacuum thermal stages and the reuse of combustion gases in the thermal stages.
Advantage 10. It enables high-quality organic liquids through continuous high temperature non-oxidative thermal depolymerisation processes.
Advantage 11. The process makes it possible to obtain organic compounds with a low content of oxygenated compounds from mixtures of biomass residues of natural polymers or their derivatives with at least 15% synthetic hydrocarbon polymers present in plastic waste. These non-oxidative vacuum thermal co-depolymerisation liquids are of a high quality due to the hydrogen transfer that occurs in the multi-stage reactors described in the present invention.
Advantage 12. It makes it possible to obtain organic compounds in a highly efficient manner. The process carried out in the equipment of the invention allows the selective stabilisation of highly efficient organic compounds by means of the use of different treatment processes that can be carried out directly on exhaust gases of high temperature, non-oxidative vacuum thermal depolymerisation reactors. This performance of continuous improvement operations for gases and liquids represents an innovation that substantially improves the performance and reduces the costs of conventional processes.

### BRIEF DESCRIPTION OF THE FIGURES

To complement the description of the process of the invention and for the purpose of helping to better understand the features of the invention, a set of drawings is attached as an integral part of said description wherein the following has been depicted with an illustrative and non-limiting character:

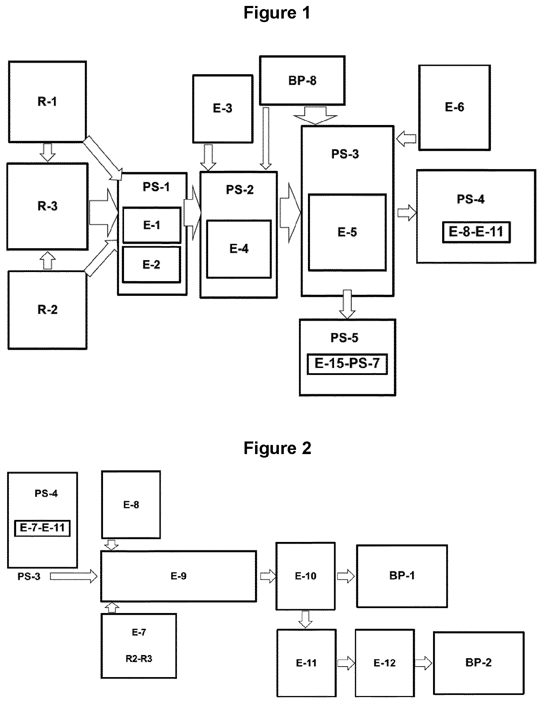

**Figure 1****.-** Diagram of the sequential process of non-oxidative vacuum thermal depolymerisation, NOXVAD, carbonisation and functionalisation from residual or cultivated biomass (R-1), synthetic polymeric waste (R-2) or mixtures (R-3), which includes the selection and pretreatment process (PS-1), the low temperature non-oxidative thermal process (PS-2), the high temperature non-oxidative vacuum depolymerisation process (PS-3), the high temperature non-oxidative vacuum carbonisation and functionalisation process (PS-4) and the raw gas treatment process (PS-5), and the low temperature process additivation stage (E-3) and the high temperature reactor inlet additivation stage (E-6).
**Figure 2****.-** Diagram of the high temperature non-oxidative vacuum carbonisation and functionalisation process (PS-4) to obtain raw carbon (BP-1) and/or functional carbon (BP-2) which comprises the carbonisation process additivation stage (E-8), the carbonisation and functionalisation stage (E-9), the reprocessing inlet stage (E-7), the wetting stage (E-10), the post-carbonisation additivation stag (E-11) and the functional carbon washing stage (E-12).

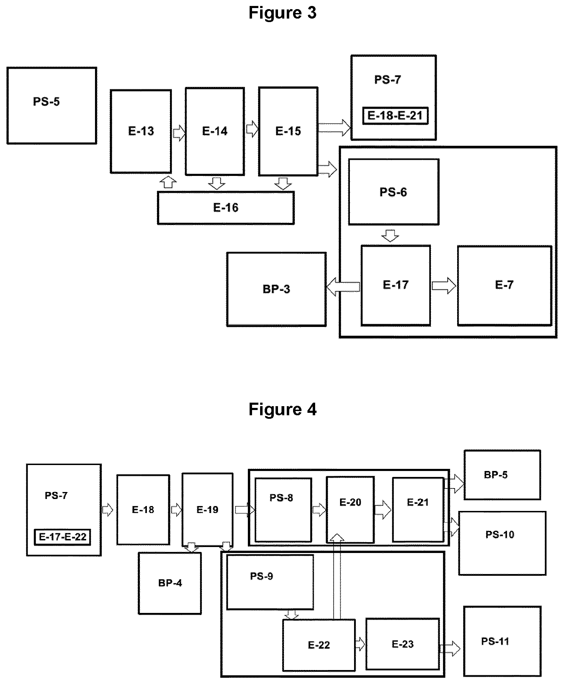

**Figure 3****.** - Diagram of the raw gas treatment process (PS-5) and heavy organic stream treatment process (PS-6) to obtain heavy organic products (BP-3) which comprises a controlled temperature quench stage (E-13), a Venturi scrubber stage (E-14), a particle removal and heavy element entraining stage (E-15), a heavy element recirculation stage (E-16), a heavy element capture stage (E-17) and a reprocessing to carbonisation stage (E-7).
**Figure 4****.** - Diagram of processes for the treatment of light gases (PS-7), light organic liquid streams (PS-8) and syngas streams (PS-9) to obtain the aqueous fraction (BP-4) and light fractions (BP-5) which comprise a low temperature light quench stage (E-18), a settling and separation stage (E-19), a homogenisation stage (E-20), a multifiltration stage (E-21), a tubular exchanger stage (E-20) and a vacuum stage (E-23).

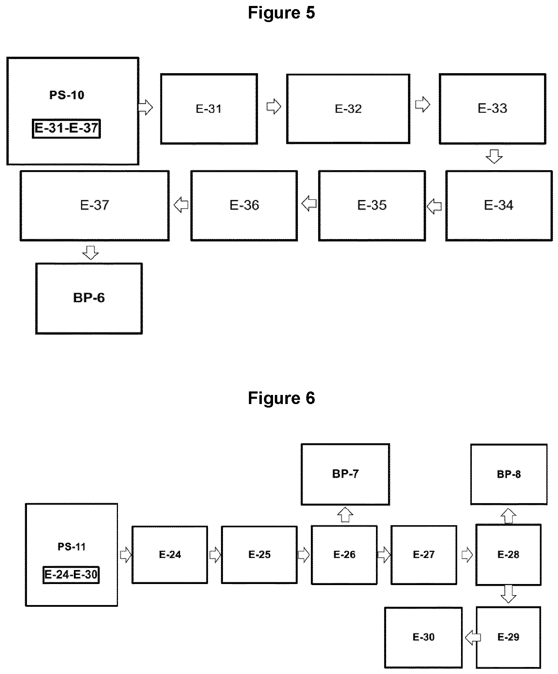

**Figure 5****.** - Diagram of the sequential process of multistage improvement of organic streams (PS-10) to obtain improved light organic fractions (BP-6) and which comprises the Cl and S compound adsorption stage (E-31), the metal adsorption stage (E-32), the nitrogenous compound adsorption stage (E-33), the selective water removal stage (E-34), the colour control and regulation stage, the organic acid control and removal stage (E-36) and the light organic fraction secondary stabilisation stage (E-37).
**Figure 6****.** - Diagram of the syngas stream reuse process (PS-11) to obtain improved product (BP-7) and thermal energy which is redirected to other stages of the process (BP-8) and which comprises the basic scrubber washing stage (E-24), the droplet removal stage (E-25), the syngas anti-return system stage (E-26), the burner stage (E-27), the distribution system stage (E-28), the thermal oxidation stage (E-29) and the catalytic oxidation stage (E-30).

### PREFERRED EMBODIMENT OF THE INVENTION

The method consists of several sequential processes (PS-1 to PS-11) that are made up of a series of stages (E-1 to E-35) which achieve the non-oxidative vacuum thermal depolymerisation with hydrogen transfer, which transforms the polymeric materials (R-1 to R-3) into simple molecules used as bioproducts or circular products (BP-1 to BP-8)

The non-oxidative vacuum thermal depolymerisation method for obtaining liquid circular products, bioproducts and functional carbons, wherein a hydrogen transfer takes place to produce hydrocarbons from solid waste, comprises the following stages:
- **Raw Material Selection and Treatment Process (PS-1).** Stage for the selection and conditioning of the residual biomass (R-1), polymeric multi-material waste (R-2) or their mixtures (R-3).
- **Low Temperature Non-Oxidative Vacuum Thermal Process (PS-2).** Stage prior to the high temperature non-oxidative vacuum thermal depolymerisation process of additivation, heating, drying fed with exhaust gases to adjust the humidity of the materials to be depolymerised.
- **High Temperature Non-Oxidative Vacuum Thermal Depolymerisation Process (PS-3).** Stage for non-oxidative vacuum thermal depolymerisation heat treatment in series made up of a sequence of reactors in series, which can be carried out in various reactors with a minimum of two.
- **High Temperature Carbonisation and Non-Oxidative Functionalisation Process (PS-4).** Stage carried out in a specific carbonisation reactor that allows the incorporation of additives and independent regulation of residence times, vacuum and reaction temperature. The process makes it possible to obtain modified or functionalised carbon or biochar (BP-2) from raw carbon or biochar (BP-1). The process makes it possible to obtain raw carbons or the continuous treatment thereof for modification.
- **Raw Gas Treatment Process (PS-5).** Process leading to the separation and recovery of syngas obtained in high temperature thermal depolymerisation and carbonisation processes.
- **Very Heavy Organic Stream Recirculation Process (PS-6).** Process of capturing and separating very heavy organic streams and the recirculation thereof to the carbonisation reactor. The process allows the output of very heavy organic streams (BP-3) for external processes or for the reprocessing thereof.
- **Light Gas Process (PS-7)** Process in which a wash is performed in a quench type device at a controlled low temperature and with variable reflux, followed by a stage of settling and separating process water and light streams. The process allows the output of the aqueous fraction (BP-4).
- **Light Stream Treatment Process (PS-8)** Sequential improvement process by means of different stages of light organic streams. Process of capturing light streams in which a stage of homogenising the different light streams, followed by settling and multifiltration to obtain a light stream product of quality. The process makes it possible to obtain light organic fractions (BP-5).
- **Syngas stream capture and treatment process (PS-9)** Process of separating and conditioning the syngas generated in non-oxidative thermal multi-stage reactors.
- **Multi-stage sequential improvement and selective adsorption process (PS-10).** Sequential process of different stages which performs an improvement of the light streams by means of multi-stage selective adsorption leading to obtaining a stabilised improved product (BP-6).
- **Syngas Stream Reuse Process (PS-11)** Process leading to the adjustment of the syngas stream so that it is recovered in the burner and to be able to use its thermal energy in the different processes. In addition, devices to achieve a minimum emission of pollutants in the form of non-harmful gases are added. The process makes it possible to obtain quality syngas (BP-7) or the thermal energy derived from the combustion of syngas (BP-8) in whole or in part, making it possible to produce both products simultaneously.

Depolymerisation or degradation of a polymer is defined as the separation of bonds between the molecules of the polymer chains, to give rise to monomers, oligomers or base molecules, by intramacromolecular chemical bond separation reactions.

Depolymerisation is a special category of degradation; it is the process that converts the polymer into a monomer, into a mixture of monomers or oligomers or chemical base molecules known as building blocks. Depolymerisation generally occurs with high temperature (thermal) or hydrolytic agents (chemical). Thermal depolymerisation is classified as the chemical reaction in which the polymer chain is converted into monomers or base molecules at a high temperature.

The depolymerisation carried out is applicable to plastics of fossil origin, bioplastics, their mixtures, as well as biodegradable, oxodegradable and anoxodegradable plastics and the mixture of plastics with different proportions of residual biomass. This invention constitutes a circular economy recycling route with a low carbon footprint for waste made up of biomass (natural polymers) and plastics (synthetic waste). This innovative technology enables the chemical recycling of plastic waste in an efficient manner and without generating microplastics.

Circular products are those products which are obtained by means of the treatment of waste that enable the circular use of materials and the circular economy. In the particular case of the invention, circular products refer to liquid products, bioproducts and/or functional carbons obtained from the process of the present invention (BP-1 to BP-8).

"Functional carbons" are chemically stable carbons that may have been modified in the carbonisation process. These carbons are quality products that can be used in the chemical industry, in the production of fuels and biofuels, in the catalyst industry, energy storage, bioremediation, adsorption of pollutants such as microplastics and metals, and many other uses derived from the organic nature of carbonaceous materials and their modifications.

The liquids produced by means of the non-oxidative thermal process are made up of two fundamental fractions, an organic fraction and an aqueous fraction. Depending on the composition of the processed polymers, as well as the process conditions, two types of organic fractions can be obtained, a light fraction and a heavy organic fraction. These productions are characterised by a light organic fraction supernatant in the aqueous fraction, an aqueous fraction and a heavy organic fraction.

The light organic liquid fraction consists of light, short-chain hydrocarbons with less density than water, consisting of hydrocarbon molecules of compounds having from one carbon atom to more than fifteen. This fraction is made up of oxygenated derivatives and light hydrocarbons.

The aqueous liquid fraction is made up of water with various oxygenated hydrocarbon substances for the most part. Alcohols, aldehydes, ketones, carboxylic acids and short chain sugars derived from the thermochemical decomposition of natural polymers such as cellulose, hemicellulose lignin, etc., are found in this fraction.

The heavy fraction consists of organic molecules with a higher density, made up of molecules having more than fourteen carbons and heavy polysaccharides. In this fraction, polyaromatic compounds derived from cracking or partial cracking of lignin, complex carbohydrates derived from the depolymerisation of complex polysaccharide polymers such as cellulose and hemicellulose, as well as heavy hydrocarbons.

Polymeric materials can be classified as natural polymers such as cellulose, hemicellulose, lignin, leather and chitin, among others, and synthetic polymers, such as plastics and rubbers. These polymers can occur in isolation or mixed with one another. In the case of biomass, it usually consists of mixtures of cellulose, hemicellulose and lignin with other materials such as salts, proteins or fatty materials. In the case of synthetic polymers present in waste, it should be noted that these polymeric materials are usually soiled, degraded and mixed with various natural or synthetic materials.

The waste mixtures consist of variable mixtures of plastics of a diverse nature and composition, with other waste from materials such as paper and cardboard, food waste, wood, plant waste, textile waste, etc.

The devices disclosed in this invention can treat polymeric materials present in waste without the need for segregation, washing stages, separation of components or removal of soiling that accompanies the materials.

These devices can treat natural polymeric materials such as biomass or leather, synthetic polymeric materials such as plastics and rubbers, and it can also treat the different mixtures of such materials.

The solid products obtained (BP-1 and BP-2) are made up of carbonaceous materials together with inorganic materials present in the processed materials. These carbonaceous materials can be used in various processes and products for the adsorption or stabilisation of products such as concrete, polymers, asphalt mixtures, binders, thermal uses, etc. These carbonaceous materials can be used for carbon sink applications by incorporating them into permanent materials or in agriculture.

The liquid products obtained are a heterogeneous mixture of hydrocarbons that additionally present a series of oxygenated products with variability in the functional groups, in addition to compounds with sulphur, chlorine, nitrogen, phosphorus, silicon and some metals. These liquids must be treated and purified so that they have controlled quality, stability and can be used in chemical and petrochemical industry processes to allow chemical recycling.

Due to the variable composition of the biomass and waste used as the raw material, the organic products present in the depolymerisation liquids consist of mixtures of many linear and branched aromatic and aliphatic hydrocarbon compounds, among which there are alkanes and alkenes in various proportions, many of them with dienes and double bonds. These products with double bonds easily undergo chemical reactions, generating more complex products having a higher molecular weight, even producing oligomers and polymers, often times generating gums and solids. This variability of chemical products causes the products obtained to be unstable and their composition to evolve over time through oxidation reactions and reactions between them.

The stages of the process of the invention (PS-1 to PS-11) and the sub-stages present in each stage (E-1 to E-37) are described in detail below.

### Process 1. Selection and Pretreatment Process (PS-1)

This process consists of the following stages:
- Selection and conditioning stage (E-1)
- Homogenisation Stage (E-2)

Process consisting of the stage for the selection and conditioning (E-1) of the residual biomass (R-1), polymeric multimaterial waste (R-2) or their mixtures (R-3) and a mixing and homogenisation stage (E-2). These two stages vary slightly depending on the matter to be processed. In the homogenisation stage, a representative mixture of the polymeric materials to be processed can be made so that the different additives are more efficient.

In the case of using synthetic polymeric waste or the mixtures making up same as the raw material to be processed, attention must be paid to the chlorine content from polymers with PVC or PVDC, among others. The materials to be processed must be purified from chlorinated components with a content of less than 2%. This separation must be performed in the raw material selection process. For contents above 0.5% chlorine or with other halogen contents, the materials must be added as additives in the additivation stage in low temperature reactors (E-4). Additionally, they can also be added as additives in the additivation stage in high temperature reactors (E-7).

### Selection and conditioning stage (E-1)

The raw materials are made up of natural polymeric materials, synthetic polymeric materials and their mixtures. This raw material can be biomass from a crop, waste biomass, municipal waste, biowaste, compost, biostabilised waste, non-hazardous industrial waste, sewage sludge, textile materials, leather, etc. All these residual materials exhibit significant variability in their composition and are generally heterogeneous mixtures of materials in which there is biomass in the form of paper and cardboard, textile materials, wood waste, etc.

In the case of biomass from a crop, the composition is more homogeneous and depends on the type of crop, whether it is woody or herbaceous, and the harvesting and storage system. This type of raw material requires processing to remove unwanted material, shredding and adjusting the particle size and humidity.

In the case of residual biomass, the composition depends on the residual flow from which it comes and the processing and storage conditions.

In the case of residual biomass consisting of mixtures of natural polymeric materials such as lignin, cellulose or hemicellulose, a pre-shredding must be performed, drying if necessary, shredding and homogenisation if the raw material is not homogeneous. In the selection stage (E-1), the previous treatment that is performed on biomass or waste with a natural polymeric content consists of:
- Pre-shredding to sizes less than 200 mm.
- Drying to reduce humidity to values below 30%.
- Separation of inert elements by screening, sieving or densimetric tables.
- Separation of metallic elements by a magnetic separator.
- Secondary shredding to sizes between 10 and 50 mm.

In the case of waste containing synthetic polymers such as plastics and rubbers, the composition depends on the residual stream of origin, as well as the operations for the storage, collection, separation and processing of each fraction.

The specific waste from specific treatments exhibit a greater homogeneity in relation to their composition. Materials from biostabilisation, bio-drying, sewage sludge, compost, compost refinement, soiled plastics and mixed plastics can be classified in this group of specific waste.

In the case of waste in which there is a representative amount of synthetic polymers, the selection and pretreatment process (PS-1) involves two stages. The selection stage (E-1) can entail a series of unitary operations in which the waste is subjected to selective separations and grinding in order to obtain a mixture of polymeric materials that is as homogeneous as possible. The complete sequence of unitary operations that must be performed in this process are:
- Primary shredding to sizes less than 250 mm
- Magnetic separator of magnetic metallic elements
- Separation of PVC and PVDC by optical processes, which can be combined with machine vision sorting equipment.
- Separation of PET and silicones by optical processes, which can be combined with machine vision sorting equipment.
- Secondary shredding to sizes between 20 and 150 mm.
- Separator of inert elements by blowing streams or by densimetric devices.
- Magnetic separator of small magnetic metallic elements.
- Eddy current separator for non-magnetic metallic elements.

### Homogenisation Stage (E-2)

The homogenisation stage (E-2) is necessary to make a homogeneous mixture of the flows of materials to be subjected to non-oxidative vacuum thermal degradation.

This sequence can be carried out completely or partially in the case of the materials used as raw material not exhibiting suitable quality for the subsequent stages described in this invention.

### Process 2. Low Temperature Non-Oxidative Vacuum Thermal Process (PS-2)

In this process, the following stages take place:
- PNO-BT Additivation Stage (E-3)
- Low Temperature Non-Oxidative Vacuum Thermal Stage, NOXVABT (E-4)

The non-oxidative vacuum thermal process (NOXVABT) at low temperature (PS-2) made up of a NOXVABT additivation stage (E-3) followed by a low temperature non-oxidative thermal stage (E-4). This stage can be performed in one or more reactors placed in series depending on the humidity content and the additivation required by the materials to be processed.

### NOXVABT Additive Stage (E-3)

Previously, together with the feeding of the reactor, there is a low temperature process NOXVABT additive dosing stage (E-3). These additives are used for the dehalogenation of waste and materials used as raw materials. The additives are dosed by means of an auxiliary hopper with a dosing device if they are additives in solid state or in the form of nozzles if they are additives in liquid state or in a solution.

The additives that can be used to reduce halogen compounds in organic liquids are selected from the following list: alkali and alkaline earth salts, metal oxides, organic and inorganic acids, zeolites, bentonites, sepiolites, attapulgites and natural or modified aluminosilicates, kaolinites and montmorillonites or mixtures thereof.

Additivation proportions are established based on the halogen content present in the materials to be processed, and it can range between 0.5% and 10% by weight of the materials to be processed.

This additivation stage has the dual objective of obtaining a high-quality liquid fraction after all the processes listed in the invention and obtaining a raw carbon which, after the carbonisation process and combined with the high temperature vacuum carbonisation process additivation stage (E-6) has a high quality and functionality.

### Low Temperature Non-Oxidative Vacuum Thermal Stage, NOXVABT (E-4)

The Low Temperature Non-Oxidative Vacuum Thermal Stage, NOXVABT (E-4) requires a thermal energy input from the exhaust gas output from the combustion equipment and thermal oxidation of the gases obtained in the non-oxidative vacuum thermal depolymerisation and carbonisation processes. In case of requiring a greater thermal input, it can be supplemented with auxiliary biomass, biogas, gas or liquid fuel combustion equipment.

This configuration has a dual objective of adjusting the humidity of the materials to be processed to less than 25% and making direct contact of the additives with the materials to be depolymerised.

The fundamental characteristics of this process are:
- The biomass or polymers used as the raw material are deposited in the main feed hopper and later introduced into the reactor inlet distributor by means of a worm screw. This screw system compresses and moves the materials to be processed while eliminating the entry of oxygen and acting as a vacuum seal.
- The hoppers are designed to operate in a sealed condition and for the feeding the reactors, they have regulated nozzles with solenoid valves for dosing CO₂ or No₂ gases to be able to dose these gases and ensure whether the non-oxidative atmosphere is required.
- The design of the worm screws fed by hoppers allows the feeding of the reactors and the compaction of the materials. This configuration acts as a vacuum seal required for the depolymerisation process object of the invention.
- The low temperature reactors have a configuration of closed screw type reactors that work under vacuum conditions.
- The vacuum of the stage must be comprised between -200 and -1000 Pa (-2 and -10 millibars).
- For the low temperature reactors, the working temperature inside the reactors must be comprised between 100-200 degrees Celsius for synthetic polymeric materials and their mixtures, and up to 300 degrees Celsius for biomasses.
- The reactors are equipped with an indirect thermal energy input (BP-5), provided with an external jacket fed by syngas combustion gases after temperature control and regulation.
- The residence time inside the reactors can be comprised between 5 and 40 minutes.

### Process 3. High Temperature Non-Oxidative Vacuum Thermal Depolymerisation Process (PS-3)

The high temperature non-oxidative vacuum thermal depolymerisation process (PS-3) is configured in two consecutive stages:
- High Temperature Process Additive Dosing Stage (E-7).
- High Temperature Non-Oxidative Vacuum Thermal Depolymerisation Stage, NOXVADAT (E-8).

PS-3 process is a sequential process that is performed in at least two screw reactors in series, and it can be made up of up to 8 reactors in series depending on the characteristics of the materials to be processed, the performance to be obtained and the desired residence time.

### High Temperature Process Additive Dosing Stage, NOXVDAT (E-7)

Previously, together with the feeding of the reactor, there is a low temperature process additive dosing stage (E-7). These additives are used for the dehalogenation of waste and materials used as raw materials.

In addition to the low temperature process additives dosage stage (E-3) and in order to obtain qualities of liquid products with a low content of chlorine and other halogens, these reactors are equipped with an additive supply system at the outlet of these reactors in the high temperature NOV reactor inlet additivation stage (E-7).
- The biomass or polymers from PS-1 are deposited in the sealed main feed hopper, where the additivation and homogenisation of the mixture with the additives is performed.
- The additives are dosed by means of an auxiliary hopper with a dosing device if they are additives in solid state or in the form of nozzles if they are additives in liquid state or in a solution.
- The combination of E-3 and E-7 achieves greater efficiency in subsequent depolymerisation processes, as well as in the dehalogenation of the liquid products generated and in the functionalisation of the carbons.

### High Temperature Non-Oxidative Vacuum Thermal Depolymerisation Stage, NOXVADAT (E-8)

Solid organic materials can be converted to liquids through intermediate or rapid thermal depolymerisation processes, which processes are characterised by performing thermochemical cracking reactions. In order to obtain higher efficiencies and for there to be no oxidation or combustion reactions, it is necessary for the entire process to take place under non-oxidative conditions. To maximise the efficiency of the depolymerisation processes and to reduce the side reactions of cyclisation, aromatisation and partial polymerisation, it is necessary to minimise the contact of the single molecules resulting from the depolymerisation processes with the polymers in depolymerisation. This stage is carried out under vacuum conditions.

The biomass or polymers that come from PS-1 are deposited in the main feed hopper and later introduced into the reactor inlet distributor by means of a worm screw.
- The reactor feed hoppers have regulated nozzles with solenoid valves for dosing CO₂ or No₂ gases in case it is required to improve the effectiveness of non-oxidative conditions.
- The design of the screws fed by the hoppers allow feeding by means of pushing and compacting the materials to be processed, generating a vacuum seal necessary for the non-oxidative vacuum thermal depolymerisation process.
- Closed screw type high temperature reactors that work under vacuum conditions are comprised between -50 and -2000 Pa (-0.5 and -20 millibars).
- The working temperature inside the reactors is comprised between 350-750 °C.
- The residence time of the raw gases inside the high temperature non-oxidative vacuum reactors is less than 2 seconds.
- The residence time of the solids in this depolymerisation reaction stage is comprised between 10 and 120 minutes.

The high temperature non-oxidative vacuum thermal depolymerisation process, NOXVADAT must be carried out in a reactor that allows the co-processing of biomass waste materials and plastic waste at the same time. Both residual materials can be found in variable mixtures in household, commercial, municipal, urban and industrial waste.

Once the polymeric materials are inside the high temperature non-oxidative vacuum thermal depolymerisation reactor (R-NOXVADAT), in the absence of oxygen, with high heat input with a controlled temperature regime and specific residence time, the depolymerisation of the polymers takes place, generating a volatile fraction which is entrained towards the raw gas process collectors (PS-5). The raw gases are made up of a high temperature stream of syngas, particles, heavy and very heavy compound, which are entrained from the reactors by the syngas extractors.

The sequence of reactors of this invention makes it possible to carry out non-oxidative vacuum thermal depolymerisation reactions under controlled conditions on heterogeneous mixtures of variable composition, such as urban waste and industrial waste. These heterogeneous mixtures between oxygenated and synthetic polymers generate side reactions in which hydrogen exchange and a reduction of oxygenated compounds take place.

One of the improvements made possible by the invention is the simultaneous co-processing of mixtures of synthetic and natural polymers. Under the reaction conditions carried out in the equipment, a depolymerisation with hydrogen transfer is performed in which the synthetic polymers act as hydrogen donors to the depolymerisation products of the natural polymers. Thus, the non-oxidative vacuum depolymerisation or co-depolymerisation co-processing mixtures in the described process achieve circular compounds or liquid and solid bioproducts with a lower content of oxygenated compounds than conventional biomass depolymerisation or pyrolysis liquids and carbons.

Depending on the reaction conditions carried out in the reactor and the balance between oxygenates derived from the biomass and the hydrogen donor compounds from plastic waste consisting of synthetic polymers, different qualities of solid, liquid and gaseous products will be obtained. This non-oxidative vacuum thermal depolymerisation with hydrogen transfer achieves organic fractions that are compatible with the oil and petrochemical industry requires a low content of oxygenated compounds that give the liquids high polarity and high acidity.

In order to obtain modified depolymerisation oils of quality derived from transfer depolymerisation, the presence of residual synthetic polymers present in the reactor is required to be at least 10%. Although it is noted that mixtures with percentages of plastic polymers greater than 5% cause significant changes in the amount of oxygenated compounds and therefore in the quality of the liquids.

In reactions in which synthetic materials account for percentages of less than 25%, they can be considered reducing additives, deoxygenating additives, hydrogenating additives, oxygenate reducing or improving additives.

### High Temperature Non-Oxidative Vacuum Carbonisation and Functionalisation Process 4 (PS-4)

In the PS-4 process, the following stages take place:
- Carbonisation process additivation stage (E-8)
- Heavy element reprocessing stage (E-7)
- High temperature non-oxidative vacuum carbonisation stage (E-9) that takes place in a high temperature non-oxidative vacuum carbonisation reactor.
- Functional carbon wetting stage (E-10)
- Post-carbonisation additivation stage (E-11)

The fundamental characteristics of this process are:
- The solid carbonaceous materials from PS-3 are deposited in the last carbonisation stage, which can be performed in one or more reactors in series to perform carbonisation, with a temperature greater than 450 °C to perform a complete carbonisation and remove heavy hydrocarbons: High temperature non-oxidative vacuum carbonisation and functionalisation.
- Together with the feeding of the reactor, there is a carbonisation process additivation stage (E-8). These additives are used to functionalise the carbon, modifying its physicochemical properties.
- The additives are dosed by means of an auxiliary hopper with a dosing device if they are additives in solid state or in the form of nozzles if they are additives in liquid state, in a solution or in the form of gas or vapour.
- The heavy element reprocessing stage (E-7) is performed at the same time as the feeding. This addition improves the quality of the carbons by increasing their fixed carbon content.
- Vacuum conditions for this stage are comprised between -50 and -5000 Pa (-0.5 and -50 millibars).
- The working temperature inside the reactors is comprised between 350-750 °C.
- This stage is made up of one or more high temperature non-oxidative carbonisation and functionalisation reactors in series depending on the residence time and reaction conditions required by the type of functional carbon to be obtained.
- The residence time of the gases inside the high temperature non-oxidative vacuum carbonisation reactors is less than 2 seconds.
- The residence time of the solids in this reaction stage is comprised between 15 and 90 minutes.

The high temperature non-oxidative vacuum carbonisation stage allows the addition of additives by means of the carbonisation and functionalisation additivation stage (E-8). This dosing can be performed by means of an auxiliary hopper with a dosing device if they are additives in solid state, in the form of nozzles if they are additives in a liquid or in a solution, or in the form of gas nozzles if they are gaseous additives, such as water vapour or CO₂.

The additives that can be used for the functionalisation of the carbons are selected from the group of alkali and alkaline earth salts (CaCO₃, CaSO₄, Na₂SO₄, Na₂CO₃, NaHCO₃, K₂CO₃, CaMg(CO₃)₂, etc.), hydroxides (NaOH, KOH, Fe(OH)₂), Fe(OH)₃) FeO(OH), etc.), metal oxides (CaO, ZnO, MgO, P₂O₅, FeO, Fe₂O₃, Fe₃O₄, FeOOH, Fe(OH)₂), etc.), organic and inorganic acids (H₂SO₄, HNOs, H₃PO₄, CH₃-COOH, etc.), gases (CO₂, water vapour, etc.) or mixtures thereof.

The combination of reaction conditions with additives makes it possible to obtain functional carbon products (BP-2) and raw carbon products (BP-1) in cases where no type of additivation is performed. Another innovation is the incorporation at the carbonisation inlet of an inlet for gases such as CO₂ o water vapour used as additives in functionalisation processes.

**Functional Carbon Wetting Stage (E-10)** Stage required to ensure the safety of the process in relation to the intrinsic explosive conditions of carbon. The purpose of this stage is to increase the humidity of the carbon obtained to a content above 15%. Wetting is performed by nozzle type spray devices inserted at the outlet of the final carbonisation reactor (in the case of having several in series). Wetting can be performed with water, deionised water, osmotised water, distilled water or process water, depending on the physicochemical requirements of the functional carbon products and the subsequent additivation stage.

**Post-Carbonisation Additivation Stage (E-11)** Stage required to neutralise the products used in the functionalisation of the functional carbons.

**Functional Carbon Washing Stage (E-12)** This stage requires washing the functional carbon obtained with distilled or demineralised water until a stable pH is obtained. In the case of the production of functional carbons intended for agricultural applications such as fertilisers, the washing stage may not be performed to ensure a greater presence of mineral nutrients present in the functional carbon produced.

### Process 5. Raw Gas Treatment (PS-5)

Process PS-5 leads to the separation and recovery of the components present in the raw gases of the non-oxidative vacuum thermal depolymerisation and carbonisation processes for their capture and treatment of usable streams. The purpose of this process is to separate the streams contained in the raw gases for their subsequent processing in each of the following sequential processes.

In this raw gas treatment process, the following stages take place:
- Temperature controlled quench stage (E-13).
- Venturi scrubber stage (E-14).
- Particle removal and heavy element entrainment stage (E-15).
- Heavy element recirculation stage (E-16).

This innovative configuration makes it possible to achieve a high condensable/non-condensable gas separation performance and to maximise the amount of non-oxidative vacuum depolymerisation liquids produced.

### Controlled Temperature Quench Stage (E-13)

Quench stage that allows the control and regulation of the temperature of the quench process. This temperature regulation makes it a versatile multifunctional equipment that can be adapted to the process conditions required for the condensation of heavy liquids.

In the case of the treatment of synthetic polymers or mixtures of synthetic polymers with natural polymers, the working temperature is established between 120 and 160 °C. These working temperatures facilitate the condensation of the organic fractions derived from the depolymerisation of synthetic polymers.

In the case of the exclusive treatment of natural polymers such as lignocellulose, the working temperature must be established between 40 and 60 °C. These process conditions cause the heavy organic liquids to condense efficiently with the aqueous liquids derived from the depolymerisation of the biomass and its intrinsic humidity.

This stage performs the first separation of heavy hydrocarbons with temperature control of raw gases. Raw gases exit the high temperature non-oxidative vacuum thermal depolymerisation reactor and are quenched in a temperature controlled quench stage. This equipment produces a stream of heavy liquid condensation products. It consists of a quench condensation tower which comes into sudden contact with the liquid fraction produced by the process itself, but at a temperature below its boiling point, which causes the condensation of most of the organic compounds contained therein. The design of this stage is such that it makes it possible in the process for there to be the shortest possible distance between the gas outlet and the quench condensation tower. This innovation makes it possible to avoid cooling the gas before condensation, enabling continuous operation of the process gases.

The fundamental characteristics of the separation devices are the following:
- Gas treatment with temperature control (120-160 °C for synthetic polymers and 40-60 °C for natural polymers) for raw gas quenching.
- The exchange system is made up of an arrangement made up of sprays per quench column. The number of sprays may range between 1 and 4 for each column.
- The system is made up of a maximum of four quench columns and can have a configuration of 1 to 4. Cooling is carried out with a minimum of 1 and a maximum of 4 heat exchangers in series. The system makes it possible to introduce this cooling system in parallel when more than 4 exchangers in series are necessary.

For the exclusive processing of natural polymers or biomass or biomass mixtures, the raw gases treated by this equipment can be diverted to the syngas burner recovery process (PS-11).

For the processing of synthetic polymers or their mixtures, the raw gases must be sent to the following stages to perform secondary and successive washings.

### Particle Removal Venturi Scrubber Stage (E-14)

Second solid particle separation and secondary raw gas washing stage. The gas resulting from the first quench tower passes through a second quench tower that manages to lower its temperature again and partially condense the organic fractions. This stage of the Venturi scrubber allows an enrichment of organic compounds in the composition of the liquid.

The equipment performs the dual function of enrichment and cleaning of possible impurities in the non-condensable gas fraction. This cleaning of particles enables the subsequent thermal utilisation thereof by means of the combustion stage.

The fundamental characteristics of this solid separation and washing device are the following:
- Capture of solid particles with a size larger than 50 microns.
- Capture of high molecular weight compounds, greater than 50 u.
- Working temperature of 250-110 °C.
- The design of this tower allows the capture of solid and/or heavy elements by means of a circular configuration.
- The design allows operation in conditions of high specific liquid/gas flow rate between the incoming gas and the reflux liquid. It has a high particle separation coefficient greater than 95%.

This design configuration involves a lower investment cost, and it also takes up less space. The Venturi scrubber device equipped with a gas speed control system which allows it to have a wide working ratio. The design of the device allows it to be adjustable, to be able to work in mist, aerosol and high particle load cycles.

The innovative design provides significant advantages in relation to conventional systems in terms of performance and adaptation of working conditions. This design offers high performance separation of fine and ultrafine particles from organic streams from non-oxidative vacuum thermal depolymerisation processes.

### Particle Removal and Heavy Element Entraining Cyclone Stage (E-15).

Separation stage for separating suspended particles and heavy compounds from the organic stream by means of a cyclone spray scrubber to capture suspended particles and heavy compounds.

The fundamental characteristics of this device for separating solid particles and capturing heavy organic compounds are the following:
- Devices made up of a high speed, temperature-controlled spray cyclone.
- An unfilled scrubber device equipped with a base that allows the stirring of washing liquids and liquid temperature control comprised between 80 and 100 °C.
- Device that ensures the maximum performance of physical or chemical adsorption with very high speeds comprised between 3 and 10 m/s.
- The use of this high speed working equipment makes it possible to reduce the size of the equipment and can be considered high performance compact equipment.
- Device with working temperature control between 70 and 250 °C working temperature.
- Suspended particle and carbon collector attached to the base of the spray cyclone. This innovative configuration of the collector allows continuous stirring, preventing the possibility of clogging the liquid outlet.
- Device designed to allow a linear rotational movement of the reflux liquids entraining the solid particles contained in the gas flow rate. The design ensures that the particles are transported in the liquid stream and are not deposited on the walls of the device.
- The design of this equipment enables high speed working conditions, thus allowing the size of the equipment to be reduced.
- The design of the cyclone scrubber allows it to be adjustable, to be able to work in mist, aerosol and high particle load cycles.
- This innovative design provides significant advantages in relation to conventional systems in terms of performance and adaptation of working conditions.
- Gas speed control is performed by means of devices equipped with side plates that allow the variable passage of gases.
- High performance for separating fine (40 and 500 microns) and ultrafine (less than 40 microns) particles.
- This device divides the input stream into two consecutive streams, a stream of light products (chains comprised between 1 and 19 carbon atoms) and another stream of heavy products with a molecular structure of hydrocarbons with chains of more than 20 carbons.

### Heavy Element Recirculation Stage (E-16).

Stage that redirects the heavy organic streams from stages E-14 and E-15 to a stirring and homogenisation tank. This stage regulates the temperature of the homogenised heavy element stream at a temperature comprised between 120 and 160 °C. The temperature regulated and homogenised stream is absorbed by a screw pump and by a worm screw that drives it to the recirculation circuit of the device of E-13.

The innovation of homogenisation and temperature control of organic streams for the recirculation of stages E-14 and E-15 represents a great increase in the performance of processes for obtaining organic liquids from depolymerisation processes.

### Process 6. Very Heavy Stream Recirculation Process (PS-6)

There are two stages in this process.
- Heavy element capture stage (E-17)
- Reprocessing of very heavy organic streams to the reprocessing inlet stage (E-7)

### Heavy Element Capture Stage (E-17).

Very heavy products (bitumen, tar, etc.) coming out from the lower part of the heavy element tank are removed in the very heavy stream capture stage. These products are output by means of a worm screw or a screw pump and is directed to the carbonisation reactors (E-19).

The process allows the outlet of heavy organic products (BP-3) for use in external processes. These products are used in refining processes, in the manufacture of waterproofing materials, pavements and asphalt mixes, carbonaceous materials, etc.

### Process 7 Light Gas Treatment Process (PS-7)

Process in which washing and condensation is performed in a low temperature controlled quench type device with variable reflux, followed by a stage of settling and separating process water and light streams.

Process in which the following stages take place:
- Low temperature light quench stage (E-18)
- Light element settling and separation stage (E-19)

### Low Temperature Light Element Quench Condenser Stage (E-18)

The light gas stream is subjected to a condensation process in a quench type **condenser** adapted for light streams of hydrocarbons mixed with water. This equipment must work at a temperature comprised between 20 and 60 degrees Celsius measured in the light liquid (E-18).

The most important specifications of this device are the following:
- High temperature spray quench condenser
- Working temperature of 20-60 °C

### Settling, water removal and light element separation stage

In this stage, the light streams are sent to a settling tank to remove the water therein by means of settling. Settling and separation stage. The light liquid goes to a settling tank to remove the water (E-18).

### Process 8 Light stream capture process (PS-8)

Process of capturing light streams in which a stage of homogenising the different light streams, followed by multifiltration to obtain a light organic stream product of quality.

Process in which the following stages take place:
- Homogenisation stage (E-20)
- Multifiltration stage (E-21)

### Homogenisation Stage (E-19)

Stage that mixes light organic streams with heavy organic streams in a stirring and homogenisation tank. The light organic stream obtained with the heavy organic stream is mixed by means of a stirring tank with a pump (E-19).

### Multifiltration stage (E-20)

Multifiltration stage of the homogenised organic stream. The device allows a progressive multifiltration of 100 microns, and 40 and 20 microns (E-20).

### Process 9 Syngas Stream Capture and Treatment Process (PS-9)

Syngas stream capture and treatment process in which two stages take place:
- Gas-liquid tubular exchanger stage (E-22)
- Vacuum stage (E-23)

### Gas-liquid tubular exchanger stage (E-22)

Heat exchange stage performed in a gas-liquid tubular condenser (E-21). The gas coming out of the light condensation system passes through a **tubular exchanger with a chiller** to condense the lightest light elements. The light condensate stream is sent to the light element tank.

The specifications of this device are as follows:
- Gas-liquid tubular configuration condenser
- Tubular heat exchanger designed for cooling light hydrocarbons
- Light hydrocarbon working temperature of 20-100 °C

### Vacuum stage (E-23)

Vacuum stage (E-23). The light gas cleaned of condensable elements is sent to an extractor that performs the vacuum of the whole circuit. This extractor, together with the vacuum seals of the reactors, maintains the sequential vacuum conditions in all the elements of the process.

The main features are:
- Vacuum pump with ATEX characteristics
- Helical type drive mechanism
- Flow rate adjustable by rotational speed
- Regulation based on required process conditions
- Working temperature of 20-50 °C.

The vacuum extractor is used to drive the syngas streams to the reuse process.

### Process 10. Sequential multi-stage improvement process (PS-10)

Improvement and selective adsorption process performed in multiple stages in which the following stages take place:
- Cl and S adsorption stage (E-31)
- Metal adsorption stage (E-32)
- Nitrogenous compound adsorption stage (E-33)
- Selective water removal stage (E-34)
- Colour control and regulation stage (E-35)
- Organic acid control stage (E-36)
- Secondary stabilisation stage (E-37)

This process as a whole has the function of eliminating pollutants present in light organic streams, acidity reduction, colour improvement and stabilisation.

This process consists of one or more vertical columns filled with adsorbents specific for each type of pollutant. The adsorbents are shaped in the form of spheres or extruded with a size between 1 and 5 mm, in order to reduce the head loss in the bed. The adsorbents to be used are specific for each adsorption stage. It is possible that fillings could be combined to reduce the number of beds.

### Cl and S compound adsorption stage (E-31)

Stage consisting of adsorption columns, one for chlorine and the other for sulphur. Chlorine adsorption is performed by means of beds filled with compounds such as calcium, sodium or potassium carbonate supported on alumina, silica-alumina, zeolites, activated aluminas; calcium oxide, sodium oxide, zinc oxide and copper oxide supported on alumina, silica-alumina or zeolites; bentonites doped with sodium potassium, calcium or magnesium. Sulphur adsorption is performed by means of beds filled with reduced or oxidised nickel, nickel-molybdenum, nickel-tungsten supported on alumina or silica-alumina, zinc oxide and copper.

### Metal adsorption stage (E-32)

Stage consisting of metal (Fe, Zn, Ca, Na) adsorption columns, made up of beds filled with macroporous alumina or silica-alumina, activated carbon; acid resins, zeolites, clays or activated bentonites.

### Nitrogenous compound adsorption stage (E-33)

Stage consisting of nitrogenous compound adsorption columns made up of beds filled with acid aluminosilicates, polymeric resins, bentonites, activated carbon, biochar, natural or activated clays.

### Selective water removal stage (E-34)

Stage consisting of columns for the adsorption and removal of water present in the hydrocarbon mixtures making up the liquid stream. This removal is performed through the hydration reaction performed by compounds such as alkali and alkaline earth hydroxides and oxides. It can also be performed by contacting liquids with molecular sieves, zeolites or clays with hydration potential.

### Colour control and regulation stage (E-35)

Stage of contacting the light hydrocarbon stream with adsorbent products to improve the colour. This adsorption can be performed by means of using activated carbon, natural clays, modified or activated clays and mixtures of these products. To regulate the colour in persistent products, it is possible to implement prior to this stage an additivation stage for adding as an additive a strong acid such as H₂SO₄, HNO₃, H₃PO₄, or the like, followed by neutralisation and separation of the aqueous phase.

### Organic acid control stage (E-36)

Stage consisting of carboxylic acid adsorption columns, where such adsorption is measured by the reduction of TAN. These columns are made up of beds filled with activated aluminas, calcium, sodium, potassium or magnesium compounds supported on alumina, silica-alumina, clays, mixed copper and zinc oxides on alumina or silica-alumina, activated carbon.

### Secondary light organic fraction stabilisation stage (E-37)

The liquid fractions are highly heterogeneous with the presence of reactive compounds such as diolefins, styrene and other conjugated double bonds. These compounds cause the organic oil to have an unstable behaviour during storage, transportation and other logistics operations. This instability generates sediments consisting of gums and polymers. The innovation carried out for light organic streams derived from non-oxidative vacuum depolymerisation processes or co-processing consists of continuous additivation or intermediate tanks of chemical products which improve stability, remove emulsions and increase the useful life of the light fractions. Additivation is performed in an intermediate tank equipped with stirring and dosing of stabilising additives that inhibit degradation processes.

The stabilising additives used are organic compounds from the families of benzoquinones, hydroquinones, multi- hydroxybenzenes, alkyl derivatives of benzenes, halogenated quinones and their derivatives. Some of the compounds used can be: 1,2-dihydroxybenzene, 1,4-benzoquinone, 2,3,5,6-tetrachlorobenzoquinone, 1,2-dihydroxy-4-t-butylbenzene, 1,2,3-trihydroxybenzene, substituted hydroquinones (2,5-di-t-butylhydroquinone and 2,5-di-t-amyl-hydroquinone, and halogenated hydroquinones), alkyl derivatives of phenols (2,6-di-t-butyl-4-methylphenol) t-butylpyrocatechols (1,2-dihydroxy-4-t-butylbenzene), and derivatives of the amine family such as: phenylenediamine, hydroxyamine, etc.

The dosages of the stabilising or inhibitor additives vary depending on the composition of the functional groups that provide instability. As a general rule, a dosage range comprised between 20 and 2,000 ppm of the mixture to be inhibited can be established.

### Process 11. Syngas Stream Reuse Process (PS-11)

Process leading to the adaptation of the syngas stream so that it can be recovered in the burner and its thermal energy can be used in the different processes. In addition, devices to achieve a minimum emission of pollutants in the form of non-harmful gases are added.

**Syngas stream capture and treatment** process in which the following stages take place:
- Basic scrubber washing stage (E-24)
- Droplet removal stage (E-25)
- Syngas anti-return system stage (E-26)
- Burner stage (E-27).
- Distribution system stage (E-28)
- Thermal oxidiser stage (E-29)
- Catalytic oxidation stage (E-30).

### Basic scrubber washing stage (E-24)

Basic scrubber separator basic washing stage with bases in the form of oxides or hydroxides such as NaOH, KOH, CaO, Ca(OH)₂, etc., which allow the capture and neutralisation of the acid compounds derived from the halogenated compounds present in the raw material used in the depolymerisation processes. This stage allows the removal of HCl, HBr, HF, SH₂, etc. The washing water can be regenerated or treated by absorption in activated carbon systems, by means of electrodialysis systems, membranes or ultrafiltration. The passage of the syngas streams through this washing stage in a basic scrubber allows the removal of the halogens present in the syngas in a way that ensures the formation of dioxins and furans in the subsequent combustion stages.

### Droplet removal stage (E-25)

Stage that is performed in an suspended droplet impact separator device consisting of a device with a disordered bed and mesh for droplet separation. It must have a configuration with a diameter comprised between 150 and 350 mm for suitable droplet separation and agglomeration. The purpose of this stage is to obtain a syngas referred to as a suspended liquid-free dry syngas.

### Syngas anti-return system stage (E-26)

Process stage consisting of a safety device that prevents the formation of unwanted gas mixtures. The device must be designed to work at low opening pressures (less than 350 Pa (3.5 mbar)) and must involve a minimum head loss. The purpose of this stage is to avoid the return of the syngas and provide safety in the stage prior to the burner.

### Burner stage (E-27).

In processes that use synthetic polymers or their mixtures, the burner stage must be performed in a device with an air vein design. This configuration makes it possible to work with the vacuum combustion chamber between -20 and -200 Pa (-0.2 and -2 millibar). This burner configuration makes it possible to absorb gas fluctuations related to flow rate and variation in the calorific value derived from its composition.

The specific characteristics of the syngas that can be processed in this device are the following:
- The syngas stream once washed and cleaned of particles and heavy elements
- Composition of the syngas consisting of mixtures of non-condensable compounds, mainly CH4, along with mostly CO, CO₂ and H₂.
- This device makes it possible to adapt the temperature and the amount of oxygen to the mixture that makes up the syngas, in such a way that they ensure the stoichiometric combustion of the compounds.
- The syngas can have a minority of propane and butane molecules.
- The syngas is used as fuel for the depolymerisation furnace.

For processes that use biomass or biomass mixtures greater than 80%, the syngas burner must have a multi-stage configuration with recirculation.
- The multi-stage device enables the introduction of fuel and/or air in stages so as to achieve low NOx production.
- This device makes it possible to work with the vacuum combustion chamber between -0.5 and -1 millibar.
- The multi-stage design makes it possible to absorb gas fluctuations in terms of flow rate and calorific value.
- These oscillations are characteristics of the processing of lignocellulosic materials or materials of biomass origin due to the thermochemical behaviour of the different components.
- This device ensures optimal combustion of the syngas.

### Distribution System Stage (E-28)

The configuration of the stage consists of a combustion gas recirculation and regulation chamber contiguous to the burner with the following specifications:
- Installation attached to the output of the combustion stage performed in the burner.
- This device allows the recirculation and regulation of combustion gases.
- This regulation of the recirculation of combustion gases makes it possible to control the temperatures of the combustion stages.
- By means of this regulation device, it is possible to send the heat transfer fluid to the different non-oxidative thermal depolymerisation and carbonisation reactors.
- This control system regulates the flow rate and residence time of the combustion gases, ensuring the highest efficiency.
- The device allows the regulation of the temperature of the high and low temperature reactors, which is performed by means of an outer jacket through which hot air circulates as a heat transfer fluid.
- Controlled temperature hot air is made by means of mixing the combustion gases at 350-550 °C and cold air.
- To achieve air mixtures at lower temperatures, the mixing is performed in a device called a mixing and distribution system, which constitutes a distribution system.
- The injection of cold air into the mixing box is performed with a cold air fan to regulate the temperature at 120-180 °C.

The technology developed allows for an advanced control system for combustion gases by means of which the temperature gradient in the depolymerisation reactor jackets is controlled.

### Thermal Oxidation Stage (E-29)

Thermal oxidation stage (E-29) in which the combustion gases are oxidised in a thermal oxidiser. The thermal oxidation stage is intended for the complete oxidation of VOC compounds with high efficiency and low NOx and CO emissions. The complete thermal oxidiser system ensures oxidation and destruction of potential hazardous air pollutants (HAPs) and volatile organic compounds (VOCs) from the resulting gas stream. These pollutants are generally based on carbon compounds and, when destroyed through thermal combustion, are chemically oxidised to form CO₂ and H₂O, avoiding unburned products.

The implementation of the thermal oxidiser, with up to 3 MWt of unit thermal power, allows the recovery of thermal energy from the syngas, which is intended for carrying out the thermochemical depolymerisation process, minimising the consumption of fossil fuels, as well as the treatment of combustion gases, thus minimising the emission of pollutants into the atmosphere. The exhaust gases from the thermal oxidiser are diverted to a catalytic combustion stage that ensures the complete oxidation of CO and hydrocarbons, and CO₂, H₂O, while at the same time reducing NOₓ to N₂.

### Catalytic Oxidation Stage (E-30)

This stage consists of selective catalytic oxidation and catalytic reduction systems through simultaneous cross-reactions by means of which pollutants NOₓ, CO, CHₓ and dioxins are transformed into harmless components.

The stage is carried out in a device that significantly reduces the emissions of products generated in high temperature combustion, such as CO, NOx and unburned compounds (CxHy). The specifications of this device are as follows:
- The catalysis stage ensures the complete oxidation of CO and compounds to CO₂, H₂O, while at the same time reducing NOₓ to N₂.
- The catalyst used is a three-way catalyst that performs its action in two stages:
   In the first reaction stage, three chemical reactions take place consecutively:
   ∘ Reduction of nitrogen oxides to nitrogen and oxygen: 2NOx → xO₂ + N₂
   ∘ Oxidation of carbon monoxide to carbon dioxide: 2CO + O₂ → 2CO₂
   ∘ Oxidation of unburned or partially burned compounds to carbon dioxide and water: CₓH₂ₓ+2 + [(3x+1)/2]O₂ → xCO₂ + (x+1)H₂O.
- The catalyst catalyses the oxidation of the unburned compounds, while the carbon monoxide oxidation and N₂ reduction process occurs in the presence of the mesoporous catalyst.

In the second phase, the reaction is 2CO + 2NO → 2CO2 + N2
- This catalytic stage allows reactions for the simultaneous removal of NOₓ and PCDD/PCDF (dioxins and furans) by means of catalytic cross-reactions, ensuring their degradation into harmless compounds.
- In this stage, urea or ammonia can be used as an NOₓ reducing agent. This additional additivation also causes decomposition of dioxins and furans at the same time.
- The oxidation catalysts used allow the conversion of CO and CHₓ to water and CO₂.

The sequence of these devices ensures the minimisation of atmospheric emissions derived from catalytic oxidation using active oxidation catalysts. The catalysts that can be used are: cerium oxides, manganese titanium, chromium, iron or metals such as nickel, palladium or platinum supported on Al₂O₃ or Zr₂O₃, among others.

### EXAMPLES

### Example 1

### Input raw material:

Mixture of plastics (between 20% to 100%) and biomass (between 0 and 80%), from waste.

The thermal process (PS-2 low temperature process, PS-3 high temperature non-oxidative vacuum depolymerisation process, PS-4 high temperature carbonisation process), PS-5 raw gas treatment process, PS-6 light gas process and PS-9 syngas capture and process work under vacuum conditions. This configuration enables maximum liquid production efficiency and minimises syngas generation.

### Process 1. Selection and Pretreatment Process (PS-1)

1. Selection stage (E-1) in the pretreatment plant with the following unitary operations: primary shredding, magnetic separation, optical separation to remove PVC, PVDC, PET and silicone, secondary shredding for a size comprised between 20 and 100 mm. Separation by air stream, Secondary magnetic separation and eddy current separation.
2. Homogenisation stage (E-2). Homogenisation stage for the residual streams used to ensure the homogeneity of the inlet to the reactors.

### Process 2. Low Temperature Non-Oxidative Vacuum Thermal Process (PS-2)

3. PNO-BT additivation stage (E-3). NaOH, KOH or CaO additivation stage depending on the chlorine content of the processed materials.
4. Twice the stoichiometric amount must be added. If an equivalent amount is added, another equivalent amount must be added in the reactor dosage inlet.
5. It can be added in the solid state in the form of powder or in a solution.
6. Continuous dosing

### Process 3. High Temperature Non-Oxidative Vacuum Thermal Depolymerisation Process with hydrogen transfer, NOXVADAT (PS-3)

7. The reactor feed hoppers have regulated nozzles with solenoid valves for dosing CO₂ or No₂ gases in case it is required to improve the effectiveness of non-oxidative conditions. High Temperature Non-Oxidative Vacuum Thermal Depolymerisation Stage, NOXVADAT (E-8)
8. The closed screw type high temperature reactors working under vacuum conditions must be at -1500 Pa (-15 millibars).
9. The working temperature inside the reactors must be comprised between 350-750 °C.
10. Reactors provided with an indirect thermal energy input (BP-8), provided with an external jacket fed by syngas combustion gases after temperature control and regulation. The combustion gas temperature must be higher than 550 °C and not more than 750 °C.
11. Screw type reactors designed to work under vacuum conditions of -1500 Pa (-15 millibars) that can be in series of two up to eight reactors depending on the materials to be processed, reaction conditions and performance.
12. For greater energy efficiency of the outer jacket, the reactors can be implemented above one another at a minimum height of two reactors and a maximum of eight. Similarly, several reactor systems can be placed in parallel.
13. The residence time of the raw gases inside the high temperature non-oxidative vacuum reactors must be 1 second.
14. The residence time of the solids in this depolymerisation reaction stage can be 30 minutes, being able to reach 120 minutes.
15. The system allows regulation depending on the feed load, process load, as well as the residence time in each of the reactors, which allows the process to be carried out continuously.
16. Starting operations are performed with propane gas, butane, diesel or biomass. Once the desired temperature regime is reached, auxiliary fuel can be completely replaced by non-condensable syngas from the process, if this is enough, or partially if not enough is produced to maintain process conditions.
17. These starting devices are used for the unscheduled stop or emergency stop function.

### Process 4. High temperature non-oxidative vacuum carbonisation and functionalisation process (PS-4)

### Process 5. Raw Gas Treatment (PS-5)

18. Quench stage (E-13) that lowers the temperature to between 120-160 degrees, condensing the heavy product
19. Particle removal Venturi scrubber stage (E-14)
20. Particle removal and heavy element entraining cyclone stage (E-15).
21. Heavy element recirculation stage (E-16), where heavy elements are stirred and sent to the quench at a temperature between 120-160.

### Process 6 Very Heavy Organic Stream Recirculation Process

22. Very heavy products (bitumen, tar, etc.) are removed by settling (E-17).
23. The very heavy liquids are output by a worm screw to the high temperature carbonisation and functionalisation reactors (E-7).

### Process 7 Light Gas Process (PS-7)

24. Light element quench stage. The gas then goes to another light element quench type condenser at a temperature of 40 °C, which can range between 30-60 °C of the light liquid, which liquid is made up of hydrocarbons and water (E-18).

### Process 8 Light stream capture process (PS-8)

25. The light liquid goes to a settling tank (E-19) to remove the water, and once it is removed, the light liquid is mixed with the heavy liquid, using a stirring tank with a pump (E-20).
26. Filtration system stage. From there it goes to a filtration system of 100 microns, and 40 and 20 microns (E-21).

### Process 9 Syngas stream capture and treatment process (PS-9)

27. The gas coming from the light element condensation system passes through a tubular exchanger with a chiller to condense the lightest light elements, falling into the light element tank (E-22).
28. The gas passes through an extractor that creates a vacuum (E-23) and drives it to PS-10.

### Process 10. Sequential multi-stage improvement process for light organic which can be performed depending on the qualities that are desired to be obtained.

### Process 11. Syngas Stream Reuse Process (PS-11)

29. The syngas is washed in the basic scrubber washing stage (E-24).
30. Once washed, it passes through a droplet removal stage (E-25) to have a dry syngas suitable for use in the burner.
31. To ensure process conditions and safety, the syngas is sent to a non-return valve stage (E-26).
32. At this point, the generated syngas (BP-7) can be partially derived for external use or to generate thermal energy for the process by means of recovery in the burner.
33. The syngas is diverted to the burner stage (E-27) with an air vein burner configuration. This process generates thermal energy (BP-8) which is sent to the process.
34. Thermal Oxidation Stage (E-29). The combustion gases are burned in a thermal oxidiser, with a residence time greater than 2 seconds for proper combustion.
35. Catalytic Oxidation Stage (E-30). The combustion gas is treated with a catalyst to remove pollutants.

### Example 2

### Input raw material:

### Residual or cultivated biomass R-1

Example of the use of devices for the treatment of polymeric materials consisting of mixtures with a 100% biomass content (natural polymers).
100% forestry or agricultural biomass can be processed.
316 L or 317 steel materials, or similar stainless steels,

Process-1 Selection and Pretreatment Process (PS-1)
   Selection stage (E-1)
   1. Primary shredding or pre-shredding to sizes less than 250 mm
   2. Magnetic separator of magnetic metallic elements, if required, depending on the conditions of the residual biomass. Magnetic separation operations should only be implemented in the event that the biomass is residual with metallic elements, for example, if it comes from pallets or furniture.
   3. Separator of inert elements by blowing streams or by densimetric devices, if required. The inert element separation operation should only be implemented in the event that the biomass is residual or natural with unwanted elements such as stones, dirt or debris. For example, if it comes from demolition wood or wood from a natural environment.
   4. Secondary shredding to sizes between 0.5 and 20 mm Homogenisation Stage (E-2)
   5. Necessary in the event that there is diversity between the different residual biomass flows.
Process 2. Low Temperature Non-Oxidative Vacuum Thermal Process (PS-2)
   PNO-BT Additivation Stage (E-3)
      6. Required to obtain functional carbons with high exchange capacity. Additivation of 2 % by weight KOH.
      Low Temperature Non-Oxidative Thermal Stage (E-4)
      7. Required to adjust the total humidity of the mixture to less than 20% Process 3. High Temperature Non-Oxidative Vacuum Thermal Depolymerisation (PS-3)
   High Temperature Process Additive Dosing Stage (E-7)
      8. Depending on the conditions required by the carbon, an additional 2% of strong hydroxides can be added as additives.
   High Temperature Non-Oxidative Vacuum Thermal Depolymerisation Stage, NOXVADAT (E-8)
      9. A sequential process that is performed in at least two screw reactors in series is necessary. The number of reactors must be that required to ensure a residence time greater than 20 minutes. This offers intermediate or high speed depolymerisation.
      10. Vacuum conditions of -3000 Pa (-30 millibars), which can range between -50 and -5000 Pa (-0.5 and -50 millibars).
      11. All the reactors work under the same stirring, residence time and temperature conditions.
   Raw Gas Treatment Process 5
      12. Quench treatment stage (E-13) with temperature control at 50 °C, which can range between 40-60 °C.
      13. In the case of 100% biomass, it is not necessary to implement the particle removal Venturi scrubber stage (E-14) and the particle removal and heavy element entraining cyclone stage (E-15).
      14. At the quench condenser outlet, the gas must be below 80 °C for proper operation.
      15. The exhaust gas from the quench is sent directly to the burner stage.
   Heavy Element Recirculation Stage (E-16)
      16. Recirculation of heavy condensates in the stirring tank are stirred and pass on to the quench at a working temperature established at 50 °C, which can range between 40 and 60 °C
      17. The condensate output is recirculated to heavy element tanks and are pumped to the quench recirculation feed
      Heavy Organic Stream Treatment Process 6 (PS-6)
      18. Removal of very heavy products (bitumen, tar, etc.) coming out from the lower part of the heavy element tank with a worm screw to the high temperature vacuum carbonisation reactors (E-16).
   Light Gas Treatment Process 7 (PS-7)
      19. The heavy liquid is condensed together with the aqueous fraction which remains as a supernatant (E-19). In the case of using 100% biomass, the aqueous fraction is referred to as wood vinegar or pyroligneous acids. The heavy organic fraction is often referred to as bio-oil or tar.
   Liquid Stream Treatment Process 8 (PS-8)
      20. The separation of heavy organic fractions from the aqueous fraction is performed by sending the liquid streams obtained to a condensation and homogenisation tank (E-20).
      Syngas Stream Treatment Process 9 (PS-9)
      21. This tank has vertical liquid-liquid tubular exchangers. Tubes with the liquid fraction and the water passes through the casing from unit heaters (E-22).
      22. Vertical condensation tubes with a unit heater cooling system. The mixture must be at a temperature comprised between 50 and 80 °C.
      23. The wood vinegar and bio-oil are separated by settling by means of outlets at two separate heights.
      24. Vacuum stage, where the vacuum is generated by vacuum extractors (E-23) driving syngas to PS-11.
Process 10. The sequential multi-stage light organic stream improvement process is not applicable to organic streams derived from biomass.
   Syngas Stream Reuse Process 11 (PS-11)
      25. In the case of the treatment of residual materials made up of lignocellulose mixtures, the droplet separator stage (E-25) and syngas anti-return system stage (E-26) are not required.
      26. Burner stage syngas non-return device
      27. The syngas is sent to the multi-stage burner stage (E-27). This device makes it possible to work with the vacuum combustion chamber between -50 and -100 Pa (-0.5 and -1 millibar.) It absorbs gas fluctuations in terms of flow rate and calorific value
      28. Combustion gases are used for their thermal energy (BP-8) by means of a distribution system stage (E-28) which recirculates them to the process.
   Thermal oxidiser stage (E-29)
      29. The combustion gases are burned in a thermal oxidiser, with a residence time greater than 2 seconds for proper combustion.
   Catalytic Stage (E-30).
      30. The gas is treated with a catalyst to remove pollutants. For facilities that process 100% lignocellulosic polymers, this stage is not required to comply with atmospheric legislation. In residual biomass facilities, it must be implemented depending on the type of residual biomass. If the residual biomass has any chemical treatment or coating, it is necessary to implement this stage depending on the atmospheric emissions intended to be obtained.

## Claims

1. A non-oxidative vacuum thermal depolymerisation process for obtaining liquid circular products, bioproducts and functional carbons, wherein a hydrogen transfer takes place to produce hydrocarbons from mixtures of natural and synthetic polymeric residues, comprising the following stages:
a) selecting and treating waste by means of drying, grinding and removing metallic elements and chlorinated polymers, and optionally homogenising the residue;
b) adding additives to the mixture resulting from the previous stage;
c) performing non-oxidative vacuum heat treatment of the mixture obtained in the previous stage at working temperatures between 100 and 200 °C for synthetic polymers or up to 300 °C for biomass, and pressures between -200 and -1000 Pa (-2 and -10 millibars);
d) performing non-oxidative vacuum thermal depolymerisation of the mixture obtained in the previous stage at working temperatures between 350 °C and 750 °C and pressures between -50 and -2000 Pa (-0.5 and -20 millibars), where a carbonaceous solid and raw gases are obtained;
e) adding additives to the carbonaceous solid resulting from the previous stage;
f) performing non-oxidative vacuum carbonisation and functionalisation of the mixture obtained in the previous stage at temperatures higher than 450 °C and pressures between -50 and -5000 Pa (-0.5 and -50 millibars);
g) wetting the carbon obtained in the previous stage to at least 15% humidity, and, optionally performing additivation and washing of the wetted carbon;
h) condensing and separating the raw gases obtained in stage d) into 3 fractions: light gaseous organic fraction, heavy liquid organic fraction and very heavy liquid organic fraction;
i) performing complete or partial recirculation of the very heavy organic fraction to the carbonisation reactor of stage f);
j) condensing and cleaning the light gaseous organic fraction obtained in stage h) to obtain an aqueous fraction, a light organic liquid fraction and a syngas fraction;
k) improving and cleaning the light organic liquid fraction obtained in the previous stage by means of adsorption columns, optionally adding stabilising compounds to the liquid fraction resulting from cleaning;
l) performing complete or partial recirculation of the syngas fraction obtained in stage j) to a burner to provide energy to the different stages of the process;
wherein stages b) and c) are performed simultaneously, and wherein stages e) and f) are performed simultaneously.

2. The non-oxidative vacuum thermal depolymerisation process according to the preceding claim, wherein the waste is selected from municipal, urban or industrial, plastic, paper, cardboard, textile, or biomass waste, or mixtures thereof.

3. The non-oxidative vacuum thermal depolymerisation process according to any preceding claim, wherein the additives added in stages b) and e) are selected from the group of alkali and alkaline earth salts, hydroxides, metal oxides, organic and inorganic acids, zeolites, bentonites, sepiolites, attapulgites, natural or modified aluminosilicates, kaolinites and montmorillonite.

4. The non-oxidative vacuum thermal depolymerisation process according to any preceding claim, wherein stage f) is performed in at least two screw reactors configured in series.

5. The non-oxidative vacuum thermal depolymerisation process according to any preceding claim, wherein the non-oxidative atmosphere of stages c), d) and f) is achieved by means of vacuum or by dosing carbon dioxide or nitrogen gases.

6. The non-oxidative vacuum thermal depolymerisation process according to any preceding claim, wherein the residence time of the solids in the reactor or reactors in stage c) is between 5 and 40 minutes.

7. The non-oxidative vacuum thermal depolymerisation process according to any preceding claim, wherein the residence time of the solids in the reactor or reactors in stage f) is between 10 and 120 minutes.

8. The non-oxidative vacuum thermal depolymerisation process according to any preceding claim, wherein the residence time of the raw gases in the reactor or reactors in stage f) is less than 2 seconds.

9. The non-oxidative vacuum thermal depolymerisation process according to any preceding claim, wherein stage h) of condensing the raw gases comprises the following stages sequentially:
i. condensing at a temperature between 120-160 °C;
ii. removing solid particles;
iii. removing solid particles and entraining heavy fractions;
iv. recirculating the heavy fractions obtained in iii) to stage i) of condensing.

10. The non-oxidative vacuum thermal depolymerisation process according to any preceding claim, wherein stage j) of condensing and cleaning the light gaseous organic fraction comprises the following stages:
- condensing at temperatures between 20 and 60 °C by means of a quench type condenser; and
- settling and removing the water present in the fraction resulting from condensation.

11. The non-oxidative vacuum thermal depolymerisation process according to any preceding claim, wherein stage j) of condensing and cleaning the light gaseous organic fraction additionally comprises several stages of progressive filtration of 100 microns, and 40 and 20 microns.

12. The non-oxidative vacuum thermal depolymerisation process according to any preceding claim, wherein cleaning the light organic liquid fraction by means of adsorption columns includes the following stages:
- removing chlorine and sulphur compounds;
- removing metals;
- removing nitrogenous compounds;
- removing water;
- controlling colour; and
- controlling organic acids.

13. The non-oxidative vacuum thermal depolymerisation process according to any preceding claim, wherein prior to recirculating the syngas fraction from stage I), the syngas fraction is subjected to a droplet washing and removal process.

14. The non-oxidative vacuum thermal depolymerisation process according to any preceding claim, wherein a hydrogen transfer takes place between the hydrocarbon polymers of the plastics and the component polymers of the biomass that is performed simultaneously in the depolymerisation process.

## Patentansprüche

1. Nichtoxidativer Vakuumwärmedepolymerisationsprozess zur Gewinnung von flüssigen zirkulären Produkten, Bioprodukten und funktionellen Kohlenstoffen, bei dem ein Wasserstofftransfer stattfindet, um Kohlenwasserstoffe aus Mischungen von natürlichen und synthetischen Polymerresten zu erzeugen, und das die folgenden Stufen umfasst:
a) Auswählen und Behandeln von Abfall durch Trocknen, Zerkleinern und Entfernen von Metallelementen und chlorierten Polymeren sowie wahlweise Homogenisieren des Restes;
b) Zugeben von Zusatzstoffen zu der aus der vorhergehenden Stufe resultierenden Mischung;
c) nichtoxidative Vakuumwärmebehandlung der in der vorhergehenden Stufe gewonnenen Mischung bei Arbeitstemperaturen zwischen 100 und 200 °C für synthetische Polymere oder bis zu 300 °C für Biomasse und Drücken zwischen -200 und -1000 Pa (-2 und -10 Millibar);
d) Durchführen einer nichtoxidativen Vakuumwärmedepolymerisation der in der vorhergehenden Stufe gewonnenen Mischung bei Arbeitstemperaturen zwischen 350 °C und 750 °C und Drücken zwischen -50 und - 2000 Pa (-0,5 und -20 Millibar), wobei ein kohlenstoffhaltiger Feststoff und Rohgase gewonnen werden;
e) Zugeben von Zusatzstoffen zu dem aus der vorhergehenden Stufe resultierenden kohlenstoffhaltigen Feststoff;
f) Durchführen einer nichtoxidativen Vakuumkarbonisierung und Funktionalisierung der in der vorhergehenden Stufe gewonnenen Mischung bei Temperaturen über 450 °C und Drücken zwischen -50 und -5000 Pa (-0,5 und - 50 Millibar);
g) Benetzen des in der vorhergehenden Stufe gewonnenen Kohlenstoffs mit mindestens 15 % Feuchtigkeit und wahlweise Additivieren und Waschen des benetzten Kohlenstoffs;
h) Kondensieren und Trennen der in Stufe d) gewonnenen Rohgase in 3 Fraktionen: leichte gasförmige organische Fraktion, schwere flüssige organische Fraktion und sehr schwere flüssige organische Fraktion;
i) Durchführen einer vollständigen oder teilweisen Rezirkulation der sehr schweren organischen Fraktion in den Karbonisierungsreaktor von Stufe f);
j) Kondensieren und Reinigen der in Stufe h) gewonnenen leichten gasförmigen organischen Fraktion, um eine wässrige Fraktion, eine leichte organische flüssige Fraktion und eine Synthesegasfraktion zu gewinnen;
k) Verbessern und Reinigen der in der vorhergehenden Stufe gewonnenen leichten organischen flüssigen Fraktion mit Hilfe von Adsorptionssäulen, wobei der aus der Reinigung resultierenden flüssigen Fraktion wahlweise stabilisierende Verbindungen zugegeben werden;
l) vollständiges oder teilweises Rezirkulieren der in Stufe j) gewonnenen Synthesegasfraktion in einen Brenner, um den verschiedenen Prozessstufen Energie bereitzustellen;
wobei die Stufen b) und c) gleichzeitig durchgeführt werden und wobei die Stufen e) und f) gleichzeitig durchgeführt werden.

2. Nichtoxidativer Vakuumwärmedepolymerisationsprozess nach dem vorhergehenden Anspruch, wobei der Abfall aus kommunalem, städtischem oder industriellem Kunststoff-, Papier-, Karton-, Textil- oder Biomasseabfall oder Mischungen davon ausgewählt ist.

3. Nichtoxidativer Vakuumwärmedepolymerisationsprozess nach einem der vorhergehenden Ansprüche, wobei die in den Stufen b) und e) zugegebenen Zusatzstoffe aus der Gruppe der Alkali- und Erdalkalisalze, Hydroxide, Metalloxide, organischen und anorganischen Säuren, Zeolithe, Bentonite, Sepiolite, Attapulgite, natürlichen oder modifizierten Alumosilikate, Kaolinite und Montmorillonite ausgewählt sind.

4. Nichtoxidativer Vakuumwärmedepolymerisationsprozess nach einem der vorhergehenden Ansprüche, wobei Stufe f) in mindestens zwei in Reihe geschalteten Schneckenreaktoren durchgeführt wird.

5. Nichtoxidativer Vakuumwärmedepolymerisationsprozess nach einem der vorhergehenden Ansprüche, wobei die nichtoxidative Atmosphäre der Stufen c), d) und f) mit Hilfe eines Vakuums oder durch Dosierung von Kohlendioxid-oder Stickstoffgasen erzielt wird.

6. Nichtoxidativer Vakuumwärmedepolymerisationsprozess nach einem der vorhergehenden Ansprüche, wobei die Verweilzeit der Feststoffe in dem Reaktor oder den Reaktoren in Stufe c) zwischen 5 und 40 Minuten beträgt.

7. Nichtoxidativer Vakuumwärmedepolymerisationsprozess nach einem der vorhergehenden Ansprüche, wobei die Verweilzeit der Feststoffe in dem Reaktor oder den Reaktoren in Stufe f) zwischen 10 und 120 Minuten beträgt.

8. Nichtoxidativer Vakuumwärmedepolymerisationsprozess nach einem der vorhergehenden Ansprüche, wobei die Verweilzeit der Rohgase in dem Reaktor oder den Reaktoren in Stufe f) weniger als 2 Sekunden beträgt.

9. Nichtoxidativer Vakuumwärmedepolymerisationsprozess nach einem der vorhergehenden Ansprüche, wobei Stufe h) des Kondensierens der Rohgase nacheinander die folgenden Stufen umfasst:
i. Kondensieren bei einer Temperatur zwischen 120 und 160 °C;
ii. Entfernen von Feststoffpartikeln;
iii. Entfernen von Feststoffpartikeln und Mitführen von schweren Fraktionen;
iv. Rezirkulieren der in iii) gewonnenen schweren Fraktionen in Stufe i) des Kondensierens.

10. Nichtoxidativer Vakuumwärmedepolymerisationsprozess nach einem der vorhergehenden Ansprüche, wobei Stufe j) des Kondensierens und Reinigens der leichten gasförmigen organischen Fraktion die folgenden Stufen umfasst:
- Kondensieren bei Temperaturen zwischen 20 und 60 °C mit Hilfe eines Quench-Kondensators; und
- Absetzenlassen und Entfernen des Wassers, das in der aus der Kondensation resultierenden Fraktion vorhanden ist.

11. Nichtoxidativer Vakuumwärmedepolymerisationsprozess nach einem der vorhergehenden Ansprüche, wobei Stufe j) des Kondensierens und Reinigens der leichten gasförmigen organischen Fraktion zusätzlich mehrere Stufen der fortschreitenden Filtration von 100 Mikrometern und 40 und 20 Mikrometern umfasst.

12. Nichtoxidativer Vakuumwärmedepolymerisationsprozess nach einem der vorhergehenden Ansprüche, wobei das Reinigen der leichten organischen flüssigen Fraktion mit Hilfe von Adsorptionssäulen die folgenden Stufen umfasst:
- Entfernen von Chlor- und Schwefelverbindungen;
- Entfernen von Metallen;
- Entfernen von stickstoffhaltigen Verbindungen;
- Entfernen von Wasser;
- Kontrollieren von Farbe; und
- Kontrollieren von organischen Säuren.

13. Nichtoxidativer Vakuumwärmedepolymerisationsprozess nach einem der vorhergehenden Ansprüche, wobei vor dem Rezirkulieren der Synthesegasfraktion aus Stufe I) die Synthesegasfraktion einem Tröpfchenwasch- und - entfernungsprozess unterzogen wird.

14. Nichtoxidativer Vakuumwärmedepolymerisationsprozess nach einem der vorhergehenden Ansprüche, wobei ein Wasserstofftransfer zwischen den Kohlenwasserstoffpolymeren der Kunststoffe und den Komponentenpolymeren der Biomasse stattfindet, der gleichzeitig im Depolymerisationsprozess durchgeführt wird.

## Revendications

1. Procédé de dépolymérisation thermique sous vide non oxydant pour l'obtention de produits circulaires liquides, de bioproduits et de carbones fonctionnels, dans lequel un transfert d'hydrogène a lieu pour produire des hydrocarbures à partir de mélanges de résidus polymères naturels et synthétiques, comprenant les étapes suivantes :
a) choisir et traiter des déchets au moyen d'un séchage, broyage et élimination d'éléments métalliques et de polymères chlorés, et éventuellement homogénéiser le résidu ;
b) ajouter des additifs au mélange résultant de l'étape précédente ;
c) effectuer un traitement thermique sous vide non oxydant du mélange obtenu à l'étape précédente à des températures de travail entre 100 et 200 °C pour des polymères synthétiques ou jusqu'à 300 °C pour la biomasse, et à des pressions entre -200 et -1000 Pa (-2 et -10 millibars) ;
d) effectuer une dépolymérisation thermique sous vide non oxydante du mélange obtenu à l'étape précédente à des températures de travail entre 350 °C et 750 °C et à des pressions entre -50 et -2000 Pa (-0,5 et -20 millibars), où un solide carboné et des gaz bruts sont obtenus ;
e) ajouter des additifs au solide carboné résultant de l'étape précédente ;
f) effectuer une carbonisation et une fonctionnalisation sous vide non oxydantes du mélange obtenu à l'étape précédente à des températures supérieures à 450 °C et à des pressions entre -50 et -5000 Pa (-0,5 et - 50 millibars) ;
g) humidifier le carbone obtenu à l'étape précédente à au moins 15 % d'humidité, et, éventuellement effectuer une additivation et un lavage du carbone humidifié ;
h) faire condenser et séparer les gaz bruts obtenus à l'étape d) en 3 fractions : fraction organique gazeuse légère, fraction organique liquide lourde et fraction organique liquide très lourde ;
i) effectuer une recirculation totale ou partielle de la fraction organique très lourde dans le réacteur de carbonisation de l'étape f) ;
j) faire condenser et nettoyer la fraction organique gazeuse légère obtenue à l'étape h) pour obtenir une fraction aqueuse, une fraction de liquide organique léger et une fraction de gaz de synthèse ;
k) améliorer et nettoyer la fraction liquide organique légère obtenue à l'étape précédente au moyen de colonnes d'adsorption, ajouter éventuellement des composés stabilisants à la fraction liquide résultant du nettoyage ;
l) effectuer une recirculation totale ou partielle de la fraction de gaz de synthèse obtenue à l'étape j) vers un brûleur pour fournir de l'énergie aux différentes étapes du procédé ;
dans lequel les étapes b) et c) sont effectuées simultanément, et dans lequel les étapes e) et f) sont effectuées simultanément.

2. Procédé de dépolymérisation thermique sous vide non oxydant selon la revendication précédente, dans lequel les déchets sont choisis parmi des déchets municipaux, urbains ou industriels, plastique, papier, carton, textile ou de biomasse, ou des mélanges de deux-ci.

3. Procédé de dépolymérisation thermique sous vide non oxydant selon l'une quelconque des revendications précédentes, dans lequel les additifs ajoutés aux étapes b) et e) sont choisis dans le groupe de sels alcalins et alcalino-terreux, hydroxydes, oxydes métalliques, acides organiques et inorganiques, zéolithes, bentonites, sépiolites, attapulgites, aluminosilicates naturels ou modifiés, kaolinites et montmorillonites.

4. Procédé de dépolymérisation thermique sous vide non oxydant selon l'une quelconque des revendications précédentes, l'étape f) est effectuée dans au moins deux réacteurs à vis configurés en série.

5. Procédé de dépolymérisation thermique sous vide non oxydant selon l'une quelconque des revendications précédentes, dans lequel l'atmosphère non oxydante des étapes c), d) et f) est réalisée par mise sous vide ou par dosage de gaz de dioxyde de carbone ou d'azote.

6. Procédé de dépolymérisation thermique sous vide non oxydant selon l'une quelconque des revendications précédentes, dans lequel le temps de séjour des solides dans le ou les réacteurs de l'étape c) est entre 5 et 40 minutes.

7. Procédé de dépolymérisation thermique sous vide non oxydant selon l'une quelconque des revendications précédentes, dans lequel le temps de séjour des solides dans le ou les réacteurs de l'étape f) est entre 10 et 120 minutes.

8. Procédé de dépolymérisation thermique sous vide non oxydant selon l'une quelconque des revendications précédentes, dans lequel le temps de séjour des gaz bruts dans le ou les réacteurs à l'étape f) est inférieur à 2 secondes.

9. Procédé de dépolymérisation thermique sous vide non oxydant selon l'une quelconque des revendications précédentes, dans lequel l'étape h) consistant à faire condenser des gaz bruts comprend les étapes suivantes en séquence :
i. faire condenser à une température entre 120 et 160 °C ;
ii. éliminer des particules solides ;
iii. éliminer des particules solides et entraîner des fractions lourdes ;
iv. refaire circuler des fractions lourdes obtenues au point iii) vers l'étape i) consistant à faire condenser.

10. Procédé de dépolymérisation thermique sous vide non oxydant selon l'une quelconque des revendications précédentes, dans lequel l'étape j) consistant à faire condenser et nettoyer la fraction organique gazeuse légère comprend les étapes suivantes :
- faire condenser à des températures entre 20 et 60 °C au moyen d'un condenseur de type quench ; et
- décanter et éliminer de l'eau présente dans la fraction résultant de la condensation.

11. Procédé de dépolymérisation thermique sous vide non oxydant selon l'une quelconque des revendications précédentes, dans lequel l'étape j) consistant à condenser et nettoyer la fraction organique gazeuse légère comprend en outre plusieurs étapes de filtration progressive de 100 microns, et 40 et 20 microns.

12. Procédé de dépolymérisation thermique sous vide non oxydant selon l'une quelconque des revendications précédentes, dans lequel le nettoyage de la fraction liquide organique légère au moyen de colonnes d'adsorption comporte les étapes suivantes :
- éliminer le chlore et les composés soufrés ;
- éliminer les métaux ;
- éliminer les composés azotés ;
- éliminer l'eau ;
- contrôler la couleur ; et
- contrôler les acides organiques.

13. Procédé de dépolymérisation thermique sous vide non oxydant selon l'une quelconque des revendications précédentes, dans lequel avant la recirculation de la fraction de gaz de synthèse de l'étape I), la fraction de gaz de synthèse est soumise à un processus de lavage et d'élimination des gouttelettes.

14. Procédé de dépolymérisation thermique sous vide non oxydant selon l'une quelconque des revendications précédentes, dans lequel un transfert d'hydrogène a lieu entre les polymères hydrocarbonés des plastiques et les polymères constitutifs de la biomasse qui est effectué simultanément au processus de dépolymérisation.
